# Europäisches Patentamt
## European Patent Office
## Office européen des brevets

(19)

(11) Veröffentlichungsnummer: **0 030 345**
**A2**

(12)

# EUROPÄISCHE PATENTANMELDUNG

(21) Anmeldenummer: **80107508.6**

(51) Int. Cl.³: **C 22 B 13/02, C 22 B 7/00**

(22) Anmeldetag: **02.12.80**

(30) Priorität: **06.12.79 DE 2949033**

(43) Veröffentlichungstag der Anmeldung: **17.06.81 Patentblatt 81/24**

(84) Benannte Vertragsstaaten: **BE FR GB IT NL SE**

(71) Anmelder: **PREUSSAG Aktiengesellschaft Metall, Rammelsberger Strasse 2, D-3380 Goslar 1 (DE)**

(72) Erfinder: **Dumont, Herbert, Bleicheweg 36, D-3380 Goslar 1 (DE)**
Erfinder: **Müller, Erich A., Dr., Werenbergstrasse 19, D-3380 Goslar 1 (DE)**
Erfinder: **Markwart, Bernd, Im Stobenholz 13, D-3380 Goslar 1 (DE)**
Erfinder: **Kohler, Andreas, Dr., Kattenberg 12, D-3380 Goslar 1 (DE)**

(74) Vertreter: **König, Reimar et al, Patentanwälte Dr.-Ing. Reimar König Dipl.-Ing. Klaus Bergen Cecilienallee 76, D-4000 Düsseldorf 30 (DE)**

(54) Verfahren zum Verhütten antimonhaltiger bleireicher Vorstoffe.

(57) Bei einem Verfahren zum Verhütten antimonhaltiger bleireicher Vorstoffe, insbesondere Akku-Schrott, wird in einer ersten Stufe zunächst unter schwach reduzierenden Bedingungen das Blei reduziert und das Antimon oxydiert. Die dabei entstehende antimonreiche Primärschlacke wird von der antimonarmen Bleischmelze abgetrennt und alsdann in einer zweiten Stufe unter stark reduzierenden Bedingungen zu einem antimonreichen Rohblei verarbeitet. Die Endschlacke der zweiten Verfahrensstufe läßt sich ohne weiteres deponieren.

0030345

- 1 -    33 772 K

PREUSSAG Aktiengesellschaft - Metall -, Rammelsberger
Straße 2, 3380 Goslar/Harz

"Verfahren zum Verhütten antimonhaltiger bleireicher
Vorstoffe"

Die Erfindung bezieht sich auf ein Verfahren zum Verhütten antiomonhaltiger bleireicher Vorstoffe, insbesondere Akkuschrott unter reduzierenden Bedingungen.

Mit zunehmender Motorisierung fallen immer größere
Mengen Akkuschrott an, der zu etwa 70% aus bleihaltigen Vorstoffen wie Bleioxyd, Bleisulfat, Gittermetall
mit etwa 5% Antimon sowie Laschenblei und einem Rest
im wesentlichen aus organischen Materialien besteht.

Beim direkten Verhütten wird der Akkuschrott mit Stückkoks  und Eisen zum Abbinden des Schwefels der Füllmasse im Schachtofen eingeschmolzen. Die organischen
Bestandteile des Akkuschrotts werden dabei verbrannt,
während die bleihaltigen Vorstoffe eingeschmolzen und
insgesamt reduziert werden. Demzufolge fällt neben einem
schwefelhaltigen Bleieisenstein ein im wesentlichen
das gesamte Antimon enthaltendes Rohblei an, das in
einem besonderen Verfahrensschritt von Antimon befreit werden muß. Nachteilig ist bei diesem Verfahren,
daß es bis zu 50% Retourschlacken erfordert und sich
nur mit stückigen Einsatzstoffen durchführen läßt; es
erfordert daher einen verhältnismäßig teuren Stückkoks
sowie ein Stückigmachen des Feinmaterials. Außerdem
läßt sich der Bleieisenstein nur schwierig von der
Schachtofenschlacke trennen und angesichts seines
Bleigehaltes von maximal etwa 15% nur unter Schwierigkeiten weiterverarbeiten.

Es ist auch bekannt, Akkuschrott aufzubereiten, um ihn in zwei Wertfraktionen, d.h. die Antimon und Blei enthaltenden Vorstoffe einerseits sowie die organischen Begleitstoffe andererseits zu trennen. Dies geschieht nach verschiedenen Verfahren, beispielsweise durch Trocknen, Absieben, Windsichten, Zerkleinern und erneutes Sichten oder durch mehrstufiges Zerkleinern und anschließendes Sink-Schwimm-Trennen. Bei den üblichen Aufbereitungsverfahren fällt ein antimonhaltiger bleireicher Vorstoff an, der sich auf verschiedene Weise pyrometallurgisch verarbeiten läßt.

Es ist bekannt, den aufbereiteten Akkuschrott im Elektro-ofen, im Kurztrommelofen oder Flammofen in Gegenwart von Kohlenstoff und Eisenzuschlägen sowie eines alkalischen Flußmittels, beispielsweise Soda, einzuschmelzen. Dem Flußmittel kommt die Aufgabe zu, angesichts der verhältnismäßig niedrigen Verfahrenstemperatur eine ausreichend flüssige, d.h. abstechbare Schlacke zu gewährleisten und den Schwefel möglichst weitgehend in der Schlacke abzubinden, um das Entstehen größerer Mengen Bleieisenstein und damit unerwünschte Bleiverluste zu verhindern bzw. den Bleigehalt des Steins zu erhöhen. Die Menge des Reduktionskohlenstoffs wird dabei so bemessen, daß sowohl Blei als auch Antimon weitestgehend reduziert werden.

Der wesentliche Nachteil dieses Verfahrens besteht darin, daß sich die alkalihaltige Schlacke wegen ihrer Wasserlöslichkeit nicht ohne weiteres verhalden läßt. Des weiteren muß auch in diesem Falle das antimonhaltige Rohblei in einer besonderen Raffinationsstufe entantimoniert werden, da das gegebene Verhältnis von Antimon zu Blei nicht dem handelsüblichen Produkt entspricht. Zudem fällt auch in diesem Falle ein - allerdings günstiger zusammengesetzter - Bleieisenstein an.

Der Erfindung liegt daher die Aufgabe zugrunde, ein Verfahren zum Verhütten antimonhaltiger bleireicher Vorstoffe zu schaffen, das mit äußerst geringen Bleiverlusten arbeitet, eine umweltfreundliche bzw. deponiefähige Schlacke und insbesondere ein antimonarmes Rohblei ergibt. Die Lösung dieser Aufgabe basiert auf dem Gedanken, in zwei aufeinanderfolgenden Verfahrensstufen zunächst den Schwefel abzutrennen, gleichzeitig das Antimon weitestgehend in eine antimonreiche Schlacke zu überführen und ein antimonarmes Rohblei zu gewinnen, sowie zum anderen die NE-Metallwerte aus der Schlacke zu reduzieren.

Im einzelnen besteht die Erfindung darin, daß bei einem Verfahren der eingangs erwähnten Art erfindungsgemäß zunächst unter schwach reduzierenden Bedingungen selektiv das Blei des Einsatzmaterials reduziert und gleichzeitig das Antimon oxydiert sowie die dabei entstehende Schlacke von der antimonarmen Bleischmelze abgetrennt und anschließend unter stark reduzierenden Bedingungen ein antimonreiches Rohblei erschmolzen wird.

Bei dem erfindungsgemäßen Verfahren wird ein antimonhaltiger bleireicher Vorstoff, beispielsweise Akkuschrott, in zwei Stufen zunächst schwach reduzierend und nach dem Trennen der in der ersten Verfahrensstufe anfallenden Phasen Metall und Schlacke stark reduzierend verhüttet. Dabei entsteht in der ersten Verfahrensstufe ein antimonarmes, schwefelarmes Rohblei, das sich wegen

- 4 -

seines niedrigen Antimongehalts auf einfache Weise auf Weichblei raffinieren läßt, während der Schwefel im wesentlichen als Schwefeldioxyd in das Abgas übergeht und sich nach herkömm-lichen Verfahren beispielsweise zu Schwefelsäure verarbeiten läßt. Die in der ersten Verfahrensstufe anfallende antimonreiche Primärschlacke enthält den überwiegenden Teil des Antimons und wird in der zweiten Verfahrensstufe mit einer entsprechend bemessenen Menge Kohlenstoff, vorzugsweise Koksgrus, bei erhöhter Temperatur unter stark reduzierenden Bedingungen zu einem antimonreichen und schwefelarmen Rohblei verarbeitet, das sich in üblicher Weise auf Hartblei raffinieren läßt.

Die gleichzeitig anfallende blei- und antimonarme Endschlacke läßt sich, da sie alkalienfrei ist, ohne weiteres Verhalden, während der Schwefeldioxydgehalt des Abgases der zweiten Verfahrensstufe ein Ablassen ins Freie erlaubt.

Wesentlich ist, daß die chargierte Kohlenstoffmenge bzw. die Ofenatmosphäre während des Einschmelzens in der ersten Verfahrensstufe eine möglichst vollständige Oxydation des Antimons erlaubt um ein möglichst antimonarmes, leicht raffinierbares Rohblei zu gewinnen. In der zweiten Verfahrensstufe kommt es hingegen vor allem darauf an, das aus der ersten Verfahrensstufe stammende Antimonoxyd und das restliche Bleioxyd so weitgehend zu reduzieren, daß am Ende eine antimon- und bleiarme deponiefähige Sekundärschlacke anfällt und die Metallverluste gering bleiben.

Die zweite Verfahrensstufe läßt sich kontinuierlich in einem besonderen Aggregat oder aber kampagnenweise in demselben Aggregat wie die erste Verfahrensstufe durchführen. Je nach dem gewünschten Endgehalt an Wertmetallen kann die zweite Verfahrensstufe ein mehrfaches Reduzieren der Primärschlacke einschließen.

Das erfindungsgemäße Verfahren eignet sich für alle antimonhaltigen bleireichen Vorstoffe, die vorzugsweise weitgehend frei von organischen Bestandteilen sein sollten, insbesondere jedoch für Akkuschrott und dessen Aufbereitungsprodukte sowie Vorstoffe aus anderen Verfahren und Konzentrate. Die Einsatzstoffe sollten sulfidschwefelarm sein. Sofern das nicht der Fall ist, werden sie zunächst einer oxydierenden Röstung unterworfen, um den Sulfidschwefel zu entfernen.

Die Schlacke der zweiten Verfahrensstufe besitzt eine zähflüssige bis feste Konsistenz. Sofern sich daraus Schwierigkeiten ergeben, läßt sich die Schlackenviskosität mit Hilfe eines Flußmittels verringern. In der ersten Verfahrensstufe ergeben sich hingegen bezüglich der Schlackenviskosität keine Schwierigkeiten, weil der Schmelzpunkt der antimonreichen Primärschlacke trotz der geringeren Verfahrenstemperatur dieser Verfahrensstufe niedrig genug liegt.

Die Kohlenstoffmenge der ersten Verfahrensstufe wird so bemessen, daß das im wesentlichen als Oxyd und Sulfat vorliegende Blei weitestgehend, jedoch wenig Antimonoxyd reduziert wird. Dabei sind die Falschluftverhältnisse zu berücksichtigen. Am besten läßt sich die Ofenatmosphäre mit Hilfe des Partialdruckverhältnisses von Kohlenmonoxyd und Kohlendioxyd in den Abgasen der Reduktionsstufen überwachen und einstellen. Das Partialdruckverhältnis sollte am Reaktionsort während der ersten Verfahrensstufe 0,0001 bis 0,025 und während der zweiten Verfahrensstufe mindestens 0,04 betragen.

Andererseits empfiehlt es sich, die Kohlenstoffmenge der ersten Verfahrensstufe auf das 1,0 bis 1,5-fache, beispielsweise das 1,2 bis 1,3- oder 1,15-fache der für die Reduktion der Bleiverbindungen stöchiometrisch erforderlichen Menge einzustellen. Um einen erheblich höheren Reduktionsgrad zu erreichen, sollte die Kohlenstoffmenge der zweiten Verfahrensstufe das 1,5 bis 5,0-fache, beispielsweise das 2,0 bis 4,0- oder 3,5-fache der stöchiometrischen Menge betragen. Diese Werte berücksichtigen die unvermeidlich in die Schmelzaggregate gelangenden Luftmengen einschließlich des Luftüberschusses aus einer Zusatzbeheizung. Als Reduktionsmittel dient vorzugsweise Koksgrus mit einer Teilchengröße bis 10 mm, vorzugsweise bis 2 mm mit unter 5% flüchtigen Bestandteilen.

Die bei der Bleiraffination anfallenden bleihaltigen Nebenprodukte sollten ebenso wie der Flugstaub beider Verfahrensstufen repetiert werden. Des weiteren können schwefelreiche Zwischenprodukte in der ersten Verfahrensstufe und schwefelarme Zwischenprodukte in der zweiten Verfahrensstufe eingesetzt werden.

Das erfindungsgemäße Verfahren wird vorzugsweise in einem Drehrohrofen durchgeführt, um aus der verhältnis-mäßig hohen Schlackenviskosität resultierende Schwie-rigkeiten zu vermeiden. Darüber hinaus besitzt der Drehrohrofen den Vorteil einer guten Durchmischung der Reaktionspartner, eines hohen Wärmeübergangs und einer gleichmäßigen Wärmeverteilung, so daß sich geringe Durchsatzzeiten bzw. hohe Durchsatzmengen je Zeiteinheit ergeben.

Der Drehrohrofen sollte an der Aufgabeseite eine kieselsäurereiche, beispielsweise aus 50% Kieselsäure, 40% Tonerde und 2,5% Titanoxyd, Rest andere Oxyde bestehende Futterzone und an der Auslaßseite eine tonerdereiche, beispielsweise aus 80% Tonerde, 17% Kieselsäure und 3,0% im wesentlichen Titanoxyd bestehende Futterzone aufweisen. Vorzugsweise besteht die Futterzone an der Auslaßseite jedoch aus hochmagnesiahaltigem Chrommagnesit.

Des weiteren sollte der Drehrohrofen eine regelbare Sekundärluftzufuhr besitzen, um die Atmosphäre über der Schmelze auf die Bleireduktion in der ersten Verfahrensstufe sowie die Blei- und Antimonreduktion in der zweiten Verfahrensstufe einzustellen.

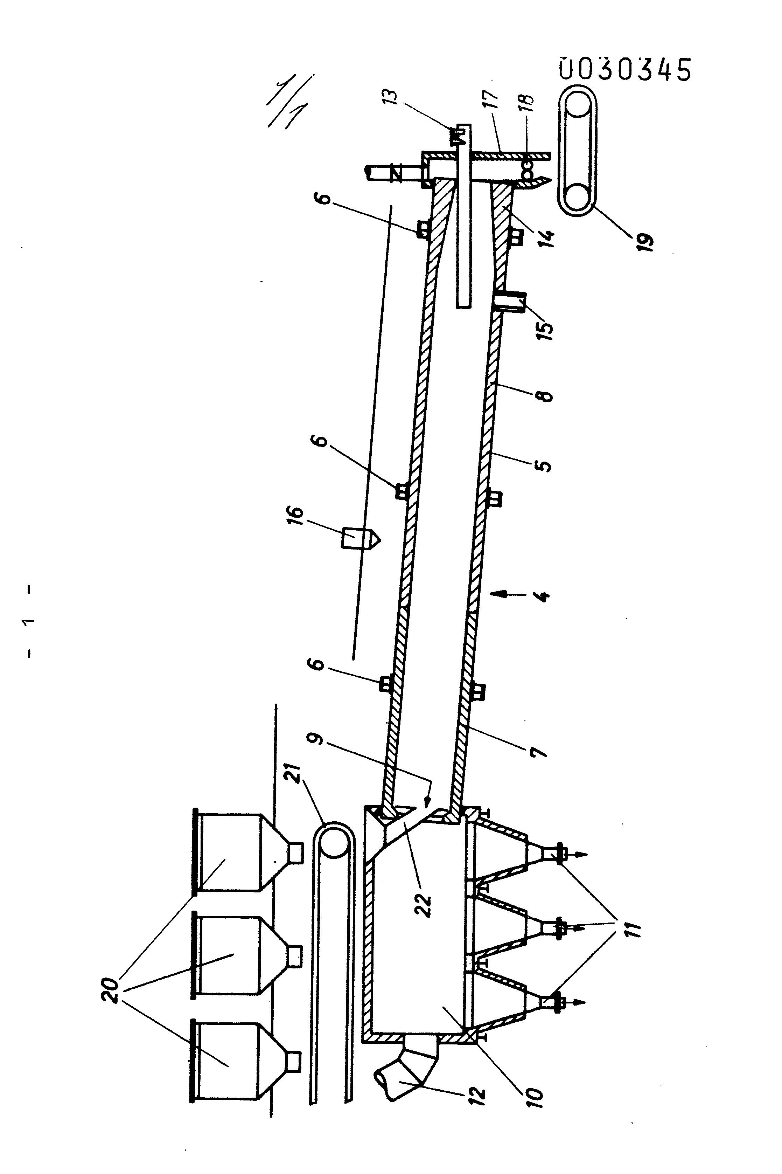

Die Erfindung wird nachfolgend anhand eines in der Zeichnung schematisch dargestellten Drehrohrofens und eines Ausführungsbeispiels des näheren erläutert.

Der Drehrohrofen 4 besteht aus einem Stahlmantel 5 mit Laufringen 6 und ist einlaßseitig mit einem feuerfesten Futter 7 aus etwa 54% Kieselsäure, 40% Tonerde und 2,1% Titanoxyd, Rest andere Oxyde ausgekleidet. Das Futter 8 in dem der Auslaßseite des Drehrohrofens 4 benachbarten, mit dem metallischen Blei in Berührung kommenden Zone besteht aus hochmagnesiahaltigem Chrommagnesit.

- 8 -

An die Einlaßöffnung 9 des Drehrohrofens 4 schließt
sich ein Fuchs 10 mit Sammeltaschen 11 für den Flugstaub und eine Abgasleitung 12 zu einem nicht dargestellten Filter an. Auslaßseitig ragt in die Ofentrommel ein axial- und winkelverstellbarer mit Erdgas
betriebener Brenner 13. Unterhalb des Brenners befindet sich ein ringförmiger Wall 14, der, ausgehend vom
Futter 8 nach außen allmählich ansteigt und das sich
im tiefsten Teil der Ofentrommel sammelnde Blei zurückhält. Unmittelbar vor dem ringförmigen Wall 14
ist in der Trommel eine verschließbare Abstichöffnung
15 zum Abstechen des Rohbleis angeordnet. Über dem Ofenmantel 5 ist ein achsparallel bewegliches Temperaturmeßgerät 16 angeordnet, das mit einem nicht dargestellten Temperaturschreiber verbunden ist und die Bildung
von Ansätzen anzeigt.

Am Austragende des Ofens ist eine Absaugkammer 17 angeordnet, in deren unterem Teil sich Granulierwalzen
18 befinden. Die Granulierwalzen 18 werden aus nicht
dargestellten Düsen mit Wasser besprüht und zerkleinern
die den Ofen verlassende Primärschlacke, die nach
Passieren der Granulierwalzen auf ein Transportband 19
fällt, sofern diese nicht sogleich der zweiten Verfahrensstufe zugeführt wird.

Der Ofen wird automatisch aus einer Reihe von Vorratsbunkern 20 über Förderbänder 21 und ein Beschickungsrohr 22 gespeist. Die Vorratsbunker 20 dienen zur Speicherung der Einsatzstoffe des erfindungsgemäßen Verfahrens.

In einem erdgasbeheizten Drehrohrofen der dargestellten Art wurden bei 1 Upm und einer Fuchstemperatur von 450°C 100 t aufbereiteter Akkuschrott einer Teilchengröße von unter 5 mm mit 73,5% Blei, 0,9% Antimon und 5,5% Schwefel zusammen mit 4% Koksgrus, bezogen auf den Akkuschrott, mit einer Teilchengröße unter 10 mm, bei 50% unter 2 mm mit 3,7% flüchtigen Bestandteilen, einem Kohlenstoffgehalt von 80% und einem Aschegehalt von 15% schwach reduzierend eingeschmolzen. Der Drehrohrofen besaß eine Länge von 40 m und einen Innendurchmesser von 1,6 m.

Aus dem obenerwähnten Einsatz entstanden 67 t Rohblei und 12,5 t Primärschlacke. Das Rohblei enthielt 90% des Bleiinhalts, jedoch nur 15% des Antimoninhalts des Einsatzstoffs bzw. 0,2% Antimon und 0,3% Schwefel. Dementsprechend enthielt die Primärschlacke 50% Blei und 6,25% Antimon bei einem Schwefelgehalt von etwa 1%, während 90% des im Einsatzstoff enthaltenen Schwefels als Schwefeldioxyd mit dem Ofenabgas abgeführt wurden.

Die Primärschlacke wurde in der zweiten Verfahrensstufe zusammen mit 7% Koksgrus, bezogen auf die Schlackenmenge, bei einer Fuchstemperatur von 500°C ebenfalls im Drehrohrofen stark reduzierend behandelt. Dabei fielen 6,5t Rohblei mit 10% Antimon und 0,5% Schwefel an. Dieses Rohblei enthielt somit über 90% der Wertmetalle, d.h. 91,5% des Bleis und 91% des Antimons aus der Primärschlacke. Demgemäß enthielten die 6 t Sekundärschlacke nur sehr wenig Blei und Antimon.

Aus den vorstehenden Daten ergibt sich für die beiden Verfahrensstufen des erfindungsgemäßen Verfahrens insgesamt eine Bleiausbeute von 98% und eine Antimonausbeute von 91%.

Diese Wertmetallausbeute ist umso bedeutungsvoller, als sie sich mit verhältnismäßig geringem technischem Aufwand in einem einfach zu beherrschenden Aggregat auf umweltfreundliche Weise erzielen läßt.

kf

- 11 -

PREUSSAG Aktiengesellschaft - Metall -, Rammelsberger Straße 2, 3380 Goslar/Harz

Patentansprüche:

1. Verfahren zum Verhütten antimonhaltiger bleireicher Vorstoffe, insbesondere Akkuschrott unter reduzierenden Bedingungen, d a d u r c h  g e k e n n - z e i c h n e t , daß zunächst unter schwach reduzierenden Bedingungen das Blei reduziert und das Antimon oxydiert sowie die dabei entstehende Primärschlacke von der antimonarmen Bleischmelze abgetrennt und alsdann unter stark reduzierenden Bedingungen zu einem antimonreichen Rohblei verarbeitet wird.

2. Verfahren nach Anspruch 1, d a d u r c h  g e - k e n n z e i c h n e t , daß ein sulfidreiches Ausgangsmaterial vor dem Einschmelzen zunächst oxydierend geröstet wird.

3. Verfahren nach einem oder mehreren der Ansprüche 1 oder 2, g e k e n n z e i c h n e t  d u r c h ein Partialdruckverhältnis von Kohlenmonoxyd zu Kohlendioxyd von 0,0001 bis 0,025 während der ersten Verfahrensstufe sowie von mindestens 0,04 während der zweiten Verfahrensstufe.

4. Verfahren nach einem oder mehreren der Ansprüche 1 bis 3, d a d u r c h  g e k e n n z e i c h n e t , daß die Menge des in der ersten Verfahrensstufe chargierten Kohlenstoffs dem 1,0 bis 1,5-fachen der für die Reduktion des Bleis erforderlichen stöchiometrischen Menge entspricht.

5. Verfahren nach einem oder mehreren der Ansprüche 1 bis 4, d a d u r c h g e k e n n z e i c h n e t , daß die Menge des in der zweiten Verfahrensstufe chargierten Kohlenstoffs dem 1,5 bis 5,0-fachen der für die Reduktion der NE-Metallwerte erforderlichen stöchiometrischen Menge entspricht.

6. Verfahren nach einem oder mehreren der Ansprüche 1 bis 5, d a d u r c h g e k e n n z e i c h n e t , daß ein festes Reduktionsmittel mit einer Teilchengröße bis 10 mm und unter 5% flüchtigen Bestandteilen in der ersten und/oder zweiten Verfahrensstufe chargiert wird.

7. Verfahren nach einem oder mehreren der Ansprüche 1 bis 6, d a d u r c h g e k e n n z e i c h n e t , daß bei der Rohbleiraffination anfallende bleihaltige Nebenprodukte repetiert werden.

8. Verfahren nach einem oder mehreren der Ansprüche 1 bis 7, d a d u r c h g e k e n n z e i c h n e t , daß schwefelreiche Zwischenprodukte in der ersten Verfahrensstufe und schwefelarme Zwischenprodukte in der zweiten Verfahrensstufe eingesetzt werden.

9. Verfahren nach einem oder mehreren der Ansprüche 1 bis 8, d a d u r c h g e k e n n z e i c h n e t , daß die Flugstäube der beiden Verfahrensstufen repetiert werden.

10. Drehrohrofen zur Durchführung des Verfahrens nach den Ansprüchen 1 bis 9, im wesentlichen bestehend aus einem feuerfest ausgekleideten Stahlmantel, einem am Austragende angeordneten Brenner und einem an der Aufgabeseite angeordneten Fuchs, g e k e n n - z e i c h n e t   d u r c h  einen ringförmigen, von innen nach außen allmählich ansteigenden Wall (14) durch dessen Öffnung ein axial- und winkelverstellbarer Brenner (13) ragt.

11. Drehrohrofen nach Anspruch 10, g e k e n n z e i c h - n e t   d u r c h  eine kieselsäurereiche Futterzone (7) im Bereich der Aufgabeseite und eine tonerdereiche Futterzone (8) im Bereich der Auslasseite.

12. Drehrohrofen nach Anspruch 10, g e k e n n z e i c h - n e t   d u r c h  eine kieselsäurereiche Futterzone (7) im Bereich der Aufgabeseite und eine Futterzone aus hochmagnesiahaltigem Chrommagnesit (8) im Bereich der Auslasseite.

13. Drehrohrofen nach einem oder mehreren der Ansprüche 10 bis 12, g e k e n n z e i c h n e t   d u r c h  eine regelbare Sekundärluftzuführung.

kf